# EUROPEAN PATENT SPECIFICATION

(11) **EP 1 323 632 B1**
(45) Date of publication and mention of the grant of the patent: **19.05.2010**
(21) Application number: 02026544.3
(22) Date of filing: 27.11.2002
(51) Int. Cl.: B64C 11/38

(54) **Oil receiver**
Öl-Empfänger
Récepteur d'huile

(30) Priority: 28.12.2001 JP 2001399538
(43) Date of publication of application: 02.07.2003
(73) Proprietor: HONDA GIKEN KOGYO KABUSHIKI KAISHA, Minato-ku Tokyo (JP)
(72) Inventor: Niimi, Atsushi, 4-1 Chuo,1-chome, Wako-shi, Saitama (JP); Sasaki, Takashi, 4-1 Chuo,1-chome, Wako-shi, Saitama (JP)
(74) Representative: Liska, Horst

(56) References cited:
- GB-A- 551 918
- US-A- 5 186 608
- US-A- 5 364 231
- US-A- 5 897 293

## Description

The present invention relates to an oil receiver for introducing lubricating oil into a shaft body from the outside according to the preamble of claim 1.

An oil receiver according to the preamble of claim 1 is known from GB 551 918 A.

When introducing lubricating oil into the shaft body from the outside, there is provided an oil receiver for supplying lubricating oil by communicating a connecting oil passage formed on the outer periphery of the shaft body with a communication hole communicating through the inside and the outside of the shaft body.

For example, in the case of an aircraft, hydraulic pressure for varying the pitch of a propeller is supplied through an oil passage inside a revolving shaft of the propeller, and an oil receiver is formed around the outer periphery of the revolving shaft of the propeller for introducing lubricating oil from an external hydraulic pressure varying unit into the oil passage inside the revolving shaft of the propeller.

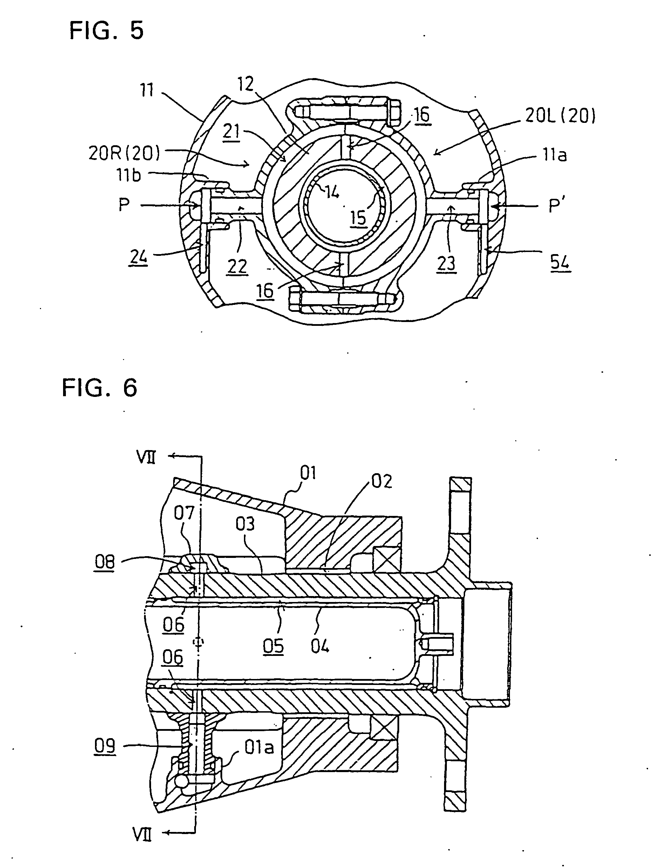

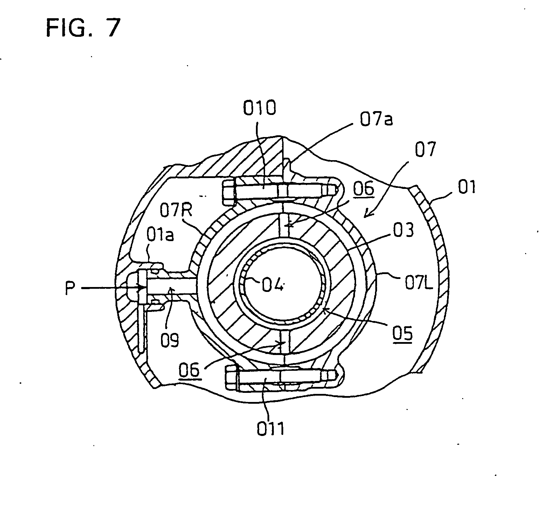

The construction of the oil receiver in the related art will be shown in Fig. 6 and Fig. 7. This example shows a construction in which the crankshaft 03 of the internal combustion engine directly rotates a propeller, and thus the crankshaft 03 is rotatably supported by the cylinder block 01 of the internal combustion engine via a bearing 02.

The crankshaft 03 has a cylindrical shape and is fitted with an inner cylinder 04 therein. The clearance between the crankshaft 03 and the inner cylinder 04 is used as an oil passage 05.

The communication holes 06 opening at the positions upstream of an oil passage 05 are formed for example at every 180° circumferentially of the crankshaft 03, and an oil receiver 07 is mounted so as to cover the plurality of communication holes 06 on the outer periphery of the crankshaft 03.

The oil receiver 07 forms an annular oil passage 08 along the outer peripheral surface of the crankshaft 03, and the aforementioned two communication holes 06 communicate with the annular oil passage 08.
A lead-in oil passage 09 extends integrally from a part of the annular oil passage 08 radially outward, and its extremity is fitted and connected in the joint pipe 01a projecting from the inner surface of the cylinder block 01 in a liquid-tight manner.

Therefore, lubricating oil supplied from the hydraulic pressure varying unit is introduced into the annular oil passage 08 from the joint pipe 01a through the lead-in oil passage 09, enters into the oil passage 05 in the crankshaft 03 through the communication holes 06, and reaches the propeller pitch varying unit at the propeller boss at the extremity, so that the pitch of the propeller can be varied.

The oil receiver 07, being fixed in contrast to the rotating crankshaft 03, is in sliding contact with the crankshaft 03, and is formed with a stopper 07a to be locked by a part of the cylinder block for preventing the oil receiver 07 from rotation together with the crankshaft 03.

The oil receiver 07 is divided into halves and includes a left half and the right half. The respective oil receiver halves 07L, 07R clamp the crankshaft 03 from the left and the right, and the fastening bosses on the top and bottom are fastened with bolts 010, 011.
The lead-in oil passage 09 is formed integrally on the right oil receiver half 07R (left side in Fig. 7).

Since the hydraulic pressure to be introduced into the lead-in oil passage 09 of the oil receiver 07 is introduced from the joint pipe 01a, the hydraulic pressure in the joint pipe 01a is applied on the end surface of the opening of the lead-in oil passage 09, and this pressure P constantly presses the right oil receiver half 07R leftward (rightward in Fig. 7), which increases friction with respect to the crankshaft 03 being in sliding contact therewith.
As a consequent, the amount of consumption of fuel may increase and progression of abrasion may be accelerated.

The oil receiver 07 is prevented from being rotated together with the rotation of the crankshaft 03 by the lead-in oil passage 09 fitted into the joint pipe 01a of the cylinder block 01 in any case. However, since it is not sufficient, the stopper 07a to be locked by a part of the cylinder block is provided separately.

The lead-in oil passage 09 is formed integrally on the right oil receiver half 07R, and the stopper 07a is formed integrally on the left oil receiver half 07L. Therefore, the left and right oil receiver halves 07L, 07R are not symmetrical, and hence are not identical in shape. As a consequent, two types of oil receiver halves must be provided.

It is an object of the present invention to provide an oil receiver in which friction with respect to the shaft body generated in association with introduction of the hydraulic pressure into the oil receiver is alleviated, and thus the amount of fuel consumption is reduced and durability is improved, whereby the types of the components is reduced, and thus the costs may be reduced.

This object is achieved by an oil receiver according to claim 1.

The invention according to Claim 1 is an oil receiver including a connecting oil passage communicating with the inside of a shaft body which is rotatable with respect to a fixed support via a communication hole formed on the outer periphery of the aforementioned shaft body, a lead-in oil passage for introducing lubricating oil into the aforementioned connecting oil passage extending from the aforementioned connecting oil passage radially outward wherein lubricating oil is introduced from the aforementioned lead-in oil passage into the inside of the aforementioned shaft body, **characterized in that** a balance oil passage is extending integrally from the aforementioned connecting oil passage radially outward on the opposite side symmetrically with the aforementioned lead-in oil passage, and the balance oil passage is closed at the extremity thereof.

Since the balance oil passage of which the extremity is closed is provided symmetrically with the lead-in oil passage, the pressure of the pressurized oil applied on the end surface of the opening of the lead-in oil passage and the pressure applied on the end surface of the opening at the extremity of the balance oil passage is the same pressure value toward each other. Accordingly, these pressures are cancelled out, and thus the oil receiver is balanced at the center thereof. As a consequent, friction with respect to the shaft body is alleviated, the amount of fuel consumption is reduced, progression of abrasion may be prevented, and thus durability may be improved.

Moreover, the oil receiver is **characterized in that** the extremity of the aforementioned lead-in oil passage and the extremity of the aforementioned balance oil passage are fitted into symmetrical joint pipes on the fixed support in a liquid-tight manner, and the joint pipe in which the extremity of the aforementioned balance oil passage is fitted is closed.

Since the extremities of the lead-in oil passage and the balance oil passage are fitted in the symmetrical joint pipes on the fixed support in a liquid-tight manner respectively, movement of the oil receiver in association with the movement of the shaft body may easily be prevented without providing a stopper even when the shaft body rotates with respect to the fixed support. In addition, since it is not a cantilevered type as in the related art, local abutment of the oil receiver due to leaning of the oil receiver may be prevented even when the shaft body is slid in the axial direction.

The invention according to Claim 2 is an oil receiver as set forth in Claim 1, **characterized in that** the aforementioned oil receiver is adapted to be divided into two halves along the symmetry plane of the lead-in oil passage and the balance oil passage that are axially symmetrical, and divided oil receiver halves are identical in shape.

Since the divided oil receiver halves are identical in shape, the types of the components are reduced, and thus reduction in costs may be achieved.

The invention according to Claim 3 is an oil receiver as set forth in Claim 1, **characterized in that** the aforementioned shaft body is a crankshaft of an internal combustion engine for an aircraft, a hydraulic pressure varying unit is provided upstream of the aforementioned lead-in oil passage, and a propeller pitch varying unit for varying the pitch of a propeller by hydraulic pressure is provided downstream of the oil passage formed in the aforementioned crankshaft in the direction of the axis of the aforementioned communication hole.

In an aircraft, the crankshaft of the internal combustion engine is adapted to rotate the propeller directly, and the hydraulic pressure of the hydraulic pressure varying unit is introduced from the lead-in oil passage into the connecting oil passage of the oil receiver, and then fed through the communication hole into the oil passage in the rotating crankshaft, and acts on the propeller pitch varying unit located downstream thereof to vary the pitch of the propeller.

Since the extremities of the lead-in oil passage and the balance oil passage are fitted into the symmetrical joint pipes on the fixed support in a liquid-tight manner, even when the shaft body is a rotating shaft as the crankshaft, the oil receiver may easily be prevented from being rotated in association with the rotation of the crankshaft without providing a stopper.

Preferred embodiments of the present invention will be described hereinafter with reference to the accompanying drawings, in which:
Fig. 1 is a schematic drawing of the drive section of the propeller for an aircraft according to an embodiment of the present invention.
Fig. 2 shows a cross sectional view of the crankshaft in the vicinity of the front end portion taken along the vertical line, and a schematic view of the oil passage for lubricating oil.
Fig. 3 is a cross sectional view of the crankshaft in the vicinity of the front end portion taken along the horizontal line.
Fig. 4 is a cross sectional view taken along the line IV-IV in Fig. 3.
Fig. 5 is a cross sectional view showing another example.
Fig. 6 is a cross sectional view of the crankshaft of the related art in the vicinity of the front end portion taken along the horizontal line.
Fig. 7 is a cross sectional view taken along the line VII-VII in Fig. 6.

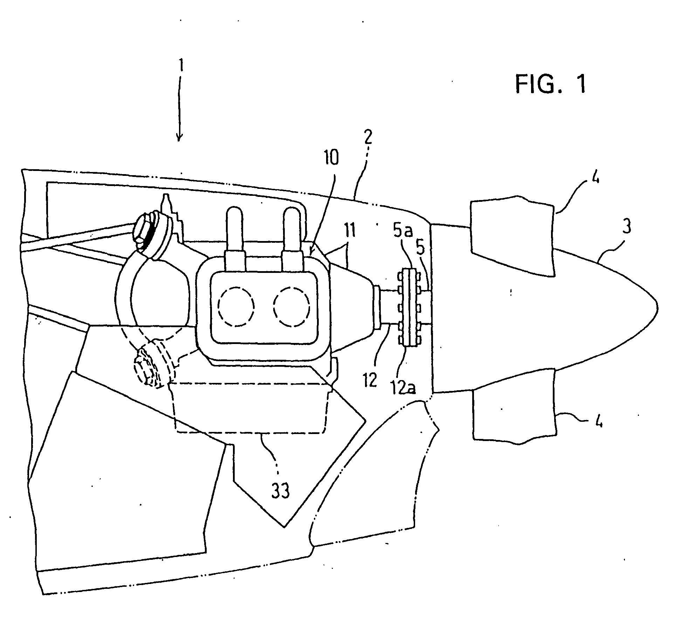

Referring now to Fig. 1 to Fig. 4, an embodiment of the present invention will be described.

The oil receiver according to the present embodiment is applied to the crankshaft 11 of the internal combustion engine 10 of the aircraft 1, and it corresponds to a part of the oil passage for lubricating oil used for varying the pitch of the propeller 4.

General construction of the drive section of the propeller 4 for an aircraft 1 is shown in Fig. 1.

A propeller boss 3 projects at the front end of the engine case 2 of the aircraft 1, and a plurality of propellers 4 are projecting in the radial directions from the propeller boss 3 so as to be capable of varying the propeller pitch (blade angle).

A horizontally opposed 4-cylinder internal combustion engine 10 is mounted in the engine case 2, and a crankshaft 12 projected forward from the cylinder block 11 is connected to the propeller shaft 5 of the propeller boss 3 coaxially by fastening the flanges 12a, 5a with each other with bolts.

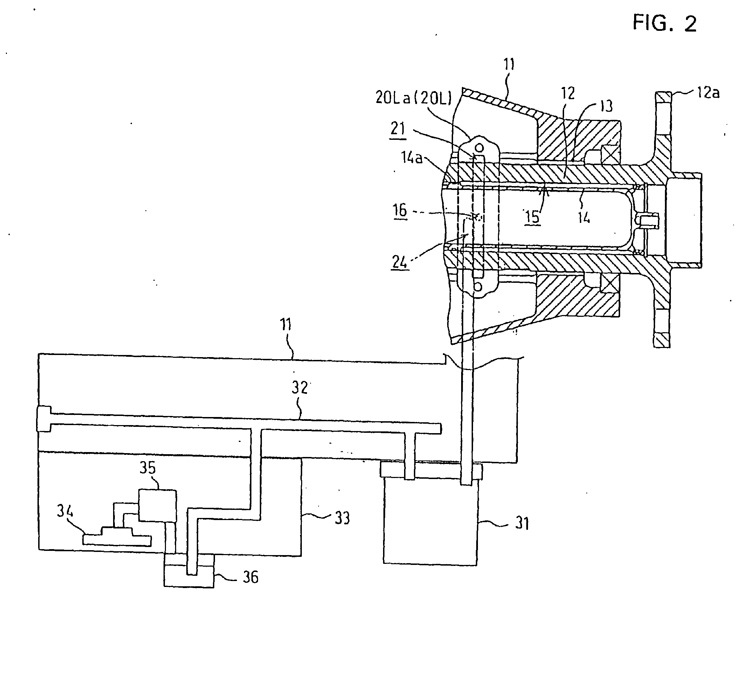

The construction of the crankshaft 12 in the vicinity of the front end portion will be shown in Fig. 2 to Fig. 4.

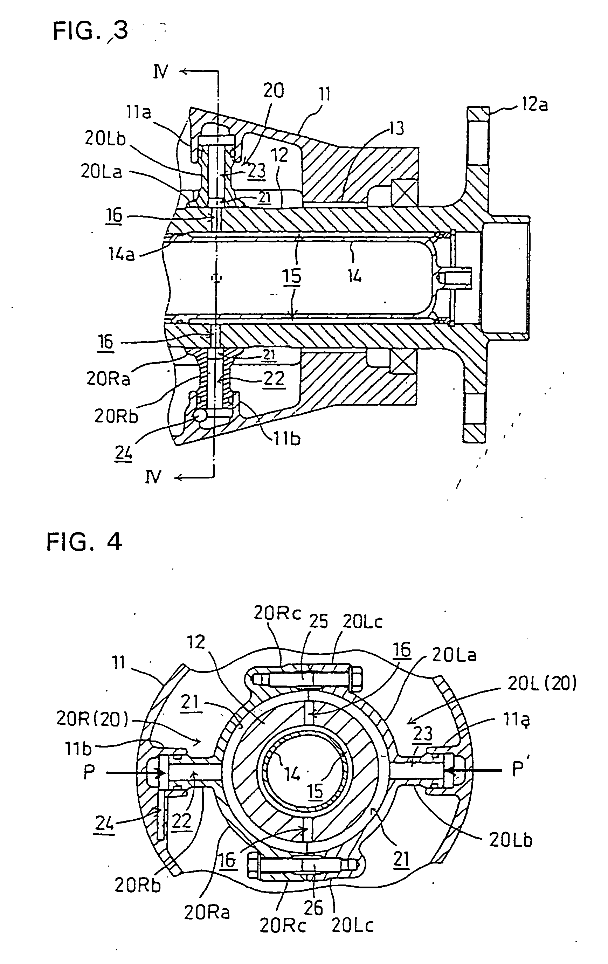

Fig. 2 shows a cross sectional view of the crankshaft 12 in the vicinity of the front end portion taken along the vertical line, and a schematic view of the oil passage for lubricating oil. Fig. 3 is a cross sectional view of the crankshaft 12 in the vicinity of the front end portion taken along the horizontal line.

The crankshaft 12 rotatably supported by the cylinder block 11 via the bearing 13 projects forward from the portion swelled out forward, and is provided with a flange 12a at the front portion.

The crankshaft 12 is cylindrical and is fitted with an inner cylinder 14 therein. The clearance formed between the crankshaft 12 and the inner cylinder 14 is used as an oil passage 15.

A part of the rear portion of the inner cylinder 14 is broadened to form a sealing portion 14a and lubricating oil is fed forward through the oil passage 15.

Communication holes 16 opening at the positions upstream (near the sealing portion 14a) of the oil passage 15 are formed on the crankshaft 12 at symmetrical positions at the angle of 180 DEG in the circumferential direction (three or more communication holes 16 may be formed), and an oil receiver 20 is mounted on the outer periphery of the crankshaft 12 so as to cover the plurality of communication holes 16.

The oil receiver 20 is used by combining the left and right oil receiver halves 20L, 20R and clamping the crankshaft 12 therebetween.

The left and right oil receiver halves 20L, 20R are identical in shape and include semi-circular portions 20La, 20Ra, straight tubes 20Lb, 20Rb projecting from the center of the respective semi-circular portions 20La, 20Ra radially outwardly, fastening bosses 20Lc, 20Rc formed at both ends of the respective semi-circular portions 20La, 20Ra.

The left and right oil receiver halves 20L, 20R are combined by abutting the mating surfaces of the upper and lower fastening bosses 20Lc, 20Rc with each other in such a manner that the crankshaft 12 is clamped by the semi-circular portions 20La, 20Ra from the left and the right, and fastening both of the fastening bosses 20Lc, 20Rc with bolts 25, 26.

The semi-circular portions 20La, 20Ra and the crankshaft 12 are in contact with each other so as to be capable of rotating with respect to each other, and the a groove formed circumferentially along the inner peripheral surface of the semi-circular portions 20La, 20Ra constitutes an annular oil passage 21 with respect to the outer peripheral surface of the crankshaft 12. This annular oil passage 21 corresponds to the connecting oil passage, and communicates with the aforementioned communication hole 16 formed on the crankshaft 12.

The straight tube 20Rb of the right (left in Fig. 4) oil receiver half 20R constitutes an lead-in oil passage 22 and communicates with the annular oil passage 21, while the straight tube 20Lb of the left oil receiver half 20L constitutes the balance oil passage 23 and communicates with the annular oil passage 21.

On the other hand, on the inner peripheral surface of the cylinder block 11, joint pipes 11a, 11b are projected so as to oppose toward the straight tubes 20Lb, 20Rb projected from the oil receiver 20 toward the left and right.
The inner diameters of the joint pipes 11a, 11b are identical with the outer diameters of the opening ends of the extremities of the straight tubes 20Lb, 20Rb, and thus the straight tubes 20Lb, 20Rb may be fitted and joined into the joint pipes 11a, 11b via the seal member in a liquid-tight manner.

While the joint pipe 11b to which the straight tube 20Rb that constitutes the lead-in oil passage 22 is fitted is in communication with the oil feed path 24, the joint pipe 11a to which the straight tube 20Lb that constitutes the balance oil passage 23 is fitted is closed.

Therefore, the hydraulic pressure supplied from the oil feed path 24 into the joint pipe 11b is introduced into the annular oil passage 21 of the oil receiver 20 through the lead-in oil passage 22, introduced from the annular oil passage 21 into the oil passage 15 in the crankshaft 12 via the communication hole 16, fed along the oil passage 15 forward in the crankshaft 12, and then forward in the propeller shaft 5 to act on the propeller pitch varying unit in the propeller boss 3.

Provided upstream of the oil feed path 24 that feed the hydraulic pressure to the oil receiver 20 is, as schematically shown in Fig. 2, a propeller governor 31 that corresponds to a hydraulic pressure varying unit, and the propeller governor 31 is supplied with lubricating oil from the main gallery 32 formed in the cylinder block 11.

The oil pan 33 is disposed downwardly of the cylinder block 11, and lubricating oil tapped in the oil pan 33 is adsorbed by the oil pump 35 through the strainer 34, and lubricating oil discharged from the oil pump 35 is supplied to the aforementioned main gallery 32 via the oil filter cartridge 36.

When the propeller governor 31 is set in a predetermined state by the operation of the propeller pitch lever, not shown, it adjusts the hydraulic pressure automatically for allowing it to act upon the propeller pitch varying unit in the propeller boss 3 via the oil receiver 20 to vary the pitch of the propeller, and automatically controls the revolution of the internal combustion engine to be at a predetermined constant revolution.

In the route of lubricating oil for varying the propeller pitch, the oil receiver 20 includes the balance oil passage 23 provided symmetrical to the lead-in oil passage 22 and being closed at the extremity as shown in Fig. 4. Therefore, the pressure P applied on the end surface of the opening of the lead-in oil passage 22 for the pressurized oil and the pressure P' applied on the end surface of the opening at the extremity of the balance oil passage 23 are the same toward each other, and thus these pressures are canceled out at the mating surfaces between the left and right oil receiver halves 20L, 20R, and thus the oil receiver 20 may be positioned at the well balanced center.

Therefore, friction generated between the oil receiver 20 and the crankshaft 12 is alleviated, and the amount of fuel consumption reduces, thereby preventing progression of abrasion and improving durability.

Since the divided oil receiver halves 20L, 20R are identical in shape, the types of the components may be reduced and thus the costs may be reduced.

Since the respective extremities of the straight tubes 20Lb, 20Rb projected from the oil receiver halves 20L, 20R to be combined toward the left and the right are fitted into the joint pipes 11a, 11b formed symmetrically on the cylinder block 11 in a liquid-tight manner, the oil receiver 20 may easily be prevented from being rotated in association with the rotation of the crankshaft 12 without providing a stopper separately.

In the embodiment described thus far, pressurized oil is introduced from the lead-in oil passage 22 through the oil feed path 24. It is also possible to provide an oil feed path 54 also on the balance oil passage 23 so as to be symmetrical to the oil feed path 24 as shown in Fig. 5, so that hydraulic pressure is also supplied from the propeller governor 31 to the oil feed path 54.

Forming both of the oil passage from the propeller governor 31 through both oil feed paths 24, 54 to the lead-in oil passage 22 and the balance oil passage 23 completely symmetrical with each other allows simultaneous supply of the same hydraulic pressure to the lead-in oil passage 22 and to the balance oil passage 23, and thus the oil receiver 20 may be positioned at the well balanced center constantly, thereby reducing friction generated between the oil receiver 20 and the crankshaft 12.

Especially when lubricating oil is started to be fed to the oil receiver 20 at the time of starting the internal combustion engine, the identical hydraulic pressure is supplied to the lead-in oil passage 22 and to the balance oil passage 23 simultaneously, and thus the oil receiver 20 may be positioned at the well balanced center in comparison with the moment immediately after the engine is started.

In summary it is an object to provide an oil receiver in which friction with respect to the shaft body generated in association with introduction of hydraulic pressure into the oil receiver is alleviated, and thus the amount of fuel consumption is reduced and durability is improved, whereby the types of the components is reduced, and thus the costs may be reduced.
It is provided an oil receiver including a connecting oil passage 21 communicating with the inside of the shaft body 12 via the communication hole 16 formed on the outer periphery of the aforementioned shaft body 12, an lead-in oil passage 22 for introducing lubricating oil into the aforementioned connecting oil passage 21 extending from the aforementioned connecting oil passage 21 radially outward wherein lubricating oil is introduced from the aforementioned lead-in oil passage 22 into the inside of the aforementioned shaft body 12, characterized in that a balance oil passage 23 is extending integrally from the aforementioned connecting oil passage 21 radially outward on the opposite side symmetrically with the aforementioned lead-in oil passage 22, and the balance oil passage 23 is closed at the extremity thereof.

## Claims

1. An oil receiver comprising:
a connecting oil passage (21) communicating with the inside of a shaft body (12) which is rotatable with respect to a fixed support (11) comprising two symmetrical joint pipes (11a, 11b) via a communication hole (16) formed on the outer periphery of said shaft body (12), and
a lead-in oil passage (22) for introducing lubricating oil into said connecting oil passage (21) extending from said connecting oil passage (21) radially outward,
wherein lubricating oil is introduced from said lead-in oil passage (22) into the inside of said shaft body (12), and
a balance oil passage (23) is extending integrally from said connecting oil passage (21) radially outward on the opposite side symmetrically with said lead-in oil passage (22), and the balance oil passage (23) is closed at the extremity thereof,
**characterized in that** the extremity of said lead-in oil passage (22) and the extremity of said balance oil passage (23) are fitted into the symmetrical joint pipes (11a, 11b) of the fixed support (11) in a liquid-tight manner, and the joint pipe (11b) in which the extremity of said balance oil passage (23) is fitted is closed.

2. An oil receiver according to claim 1,
**characterized in that** said oil receiver (20) is adapted to be divided into two halves (20L, 20R) along the symmetry plane of the lead-in oil passage (22) and the balance oil passage (23) that are axially symmetrical, and divided oil receiver halves (20L, 20R) are identical in shape.

3. An oil receiver according to claim 1,
**characterized in that** said shaft body (12) is a crankshaft (12) of the internal combustion engine (10) for an aircraft (1), a hydraulic pressure varying unit (31) is provided upstream of said lead-in oil passage (22), and a propeller pitch varying unit for varying the pitch of the propeller (4) by hydraulic pressure is provided downstream of the oil passage (15) formed in said crankshaft (12) in the direction of the axis of said communication hole (16).

## Patentansprüche

1. Ölaufnehmer, umfassend:
einen Verbindungsöldurchgang (21), welcher mit der Innenseite eines Wellenkörpers (12), welcher in Bezug auf eine feste Abstützung (11) drehbar ist, die zwei symmetrische Verbindungsrohre (11a, 11b) umfasst, mittels eines Verbindungslochs (16) in Verbindung steht, welches an dem Außenumfang des Wellenkörpers (12) ausgebildet ist, und
einen Einleitungsöldurchgang (22), um Schmieröl in den Verbindungsöldurchgang (21) einzuleiten, welcher sich von dem Verbindungsöldurchgang (21) radial nach außen erstreckt,
wobei das Schmieröl von dem Einleitungsöldurchgang (22) in die Innenseite des Wellenkörpers (12) eingeleitet wird, und
wobei sich ein Ausgleichsöldurchgang (23) integral von dem Verbindungsöldurchgang (21) auf der gegenüberliegenden Seite symmetrisch zu dem Einleitungsöldurchgang (22) radial nach außen erstreckt, und der Ausgleichsöldurchgang (23) an seinem äußersten Ende geschlossen ist,
**dadurch gekennzeichnet, dass** das äußerste Ende des Einleitungsöldurchgangs (22) und das äußerste Ende des Ausgleichsöldurchgangs (23) in die symmetrischen Verbindungsrohre (11a, 11 b) von der festen Abstützung (11) in einer flüssigkeitsdichten Weise eingesetzt sind, und dass das Verbindungsrohr (11 b), in welches das äußerste Ende des Ausgleichsöldurchgangs (23) eingesetzt ist, geschlossen ist.

2. Ölaufnehmer nach Anspruch 1,
**dadurch gekennzeichnet, dass** der Ölaufnehmer (20) dazu ausgebildet ist, längs der Symmetrieebene des Einleitungsöldurchgangs (22) und des Ausgleichsöldurchgangs (23), welche axial symmetrisch sind, in zwei Hälften (20L, 20R) geteilt zu sein, und die geteilten Ölaufnehmerhälften (20L, 20R) in der Form identisch sind.

3. Ölaufnehmer nach Anspruch 1,
**dadurch gekennzeichnet, dass** der Wellenkörper (12) eine Kurbelwelle (12) von dem Verbrennungsmotor (10) für ein Flugzeug (1) ist, eine Hydraulikdruckveränderungseinheit (31) stromaufwärts von dem Einleitungsöldurchgang (22) vorgesehen ist, und eine Propellersteigungsveränderungseinheit, um die Steigung des Propellers (4) durch Hydraulikdruck zu verändern, stromabwärts von dem Öldurchgang (15) vorgesehen ist, welcher in der Kurbelwelle (12) in der Richtung der Achse des Verbindungslochs (16) ausgebildet ist.

## Revendications

1. Récepteur d'huile comprenant :
un passage de raccordement d'huile (21) communiquant avec l'intérieur d'un corps d'arbre (12) qui peut tourner par rapport à un support fixe (11) comprenant deux tuyaux d'assemblage symétriques (11a, 11b) via un trou de communication (16) formé sur la périphérie externe dudit corps d'arbre (12), et
un passage d'entrée d'huile (22) pour introduire l'huile de lubrification dans ledit passage de raccordement d'huile (21) s'étendant à partir dudit passage de raccordement d'huile (21) radialement vers l'extérieur,
dans lequel l'huile de lubrification est introduite à partir dudit passage d'entrée d'huile (22) dans l'intérieur dudit corps d'arbre (12), et
un passage de compensation d'huile (23) s'étend d'un seul tenant à partir dudit passage de raccordement d'huile (21) radialement vers l'extérieur sur le côté symétriquement opposé dudit passage d'entrée d'huile (22), et le passage de compensation d'huile (23) est fermé au niveau de son extrémité,
**caractérisé en ce que** l'extrémité dudit passage d'entrée d'huile (22) et l'extrémité dudit passage de compensation d'huile (23) sont montées dans les tuyaux d'assemblage symétriques (11a, 11b) du support fixe (11) d'une manière étanche au liquide, et le tuyau d'assemblage (11b) dans lequel l'extrémité dudit passage de compensation d'huile (23) est montée, est fermé.

2. Récepteur d'huile selon la revendication 1, **caractérisé en ce que** ledit récepteur d' huile (20) est adapté pour être divisé en deux moitiés (20L, 20R) le long du plan de symétrie du passage d'entrée d'huile (22) et du passage de compensation d'huile (23) qui sont axialement symétriques, et les moitiés de récepteur d'huile divisé (20L, 20R) ont une forme identique.

3. Récepteur d'huile selon la revendication 1, **caractérisé en ce que** ledit corps d'arbre (12) est un vilebrequin (12) du moteur à combustion interne (10) pour un aviron (1), une unité de variation de pression hydraulique (31) est prévue en amont dudit passage d'entrée d'huile (22) et une unité de variation de pas d'hélice pour modifier le pas de l'hélice (4) par la pression hydraulique est prévue en aval du passage d'huile (15) formé dans ledit vilebrequin (12) dans la direction de l'axe dudit trou de communication (16).
